# EUROPEAN PATENT APPLICATION

(11) **EP 1 289 248 A1**
(43) Date of publication of application: **05.03.2003**
(21) Application number: 01870173.0
(22) Date of filing: 10.08.2001
(51) Int. Cl.: H04M 11/00, H04Q 7/22, H04Q 9/00, H04B 1/38, G08C 17/02

(54) **Wireless processing system for switching, controlling and monitoring appliances adapted for multiple users**

(71) Applicant: Denis, Eric, 6800 Libramont (BE)
(72) Inventor: Denis, Eric, 6800 Libramont (BE)
(74) Representative: Van Malderen, Joelle

(57) **Abstract**

The present invention is related to a communication system for transmitting and receiving messages, resulting from multiple tasks required by one or more non predefined users, said system comprising a radio communication network for transmitting and receiving said messages, at least one remote mobile terminal operable with the radio communication network, able to be used by said users and a processing or command unit (2) linked through digital and/or analogic connectors to various peripherals and sensors (4 and 5) and to a GPS module, said processing unit (2) being integrated within a local mobile telephone transmitter/receiver GSM (module) (6) operable with the radio communication network, wherein said processing unit (2) is programmed to receive instruction messages from the multiple users to control the requested multiple tasks performed upon the peripherals or sensors (4 and 5) and transmits one or more result messages of said performed tasks to the multiple users through remote communications.

## Description

### Field of the invention

The present invention is related to a dynamic task processing communication system comprising teletransmission/reception means able to perform or monitor multiple tasks required by multiple non predetermined users.

### Background of the invention

Through the development of new individual communication tools (mobile telephone, personal computer, etc.), consumers have now personal access to different types of systems able to detect intruders in private buildings and vehicles (DE-A-19823122, WO-A-00/17021). These tools can also be incorporated in devices that can monitor through the use of sensors various physical parameters (temperature humidity, light, etc.) in buildings (BE-1007512) or control vending machines (WO-A-00/19748).

The document DE-19844458 further describes a theft protection method of a movable object, especially a motor vehicle. Said method involves the using of a mobile station which is arranged at or in the moveable object and which is in contact with one or more radio stations and a supervision arrangement, especially an alarm system which is activated at the intended standstill of the object and which produces an alarm signal at the detection of an inadmissible manipulation, especially a theft, intrusion or break-in.

The mobile station may be formed as a GPS arrangement, whereby the control arrangement monitors change in the provided position information, or GSM transmitter/receiver, especially a mobile telephone, whereby a position information available in the communication network is used for detecting a position change.

However, such systems and methods are limited to perform multiple tasks required by a single user.

### Aims of the invention

The present invention aims to provide a dynamic task processing communication system comprising teletransmission/reception means adapted for performing multiple tasks, which do not present the drawbacks of the state of the art, especially a method and system adapted for performing multiple tasks requested by multiple non predetermined users.

Another aim of the present invention is to provide such system which is of a simple, non-expensive and efficient conception and which does not necessarily require a permanent connection to an energy source.

### Summary of the invention

The present invention is related to a dynamic task processing system comprising teletransmission/reception means adapted for performing multiple tasks required by multiple non predetermined (chosen or selected) users.

The system according to the invention is a communication system for transmitting and receiving messages, requesting and resulting from multiple tasks required by one or more consumers (or users) , said system comprising a radio communication network for transmitting and receiving said messages, at least one remote mobile terminal operable with the radio communication network, able to be used by said users or consumers (through which users can send instruction messages (or queries) regarding one or more tasks to be performed) and a processing (or command) unit (made preferably of a programmable microprocessor or any other programmable means such as a personal computer) linked through digital and/or analogic connectors to various peripheral or sensors (able to perform the task(s) requested by the user(s)), said processing unit being integrated with a local mobile telephone transmitter/receiver GSM (module) operable with the radio communication network.

Said processing is programmed to receive instruction messages (queries) from the multiple users, to control multiple tasks performed upon the peripherals or by the sensors and to transmit messages resulting from said performed tasks to the corresponding users through remote communications.

Preferably, the processing unit is programmed to receive and treat chronologically the instruction messages (queries) requested by the multiple users.

Furthermore, in the system according to the invention the processing unit is also linked to a GPS module or arrangement whereby a position modification (localisation information) is available to the user and can be used for detecting a position change of the local GSM module outside a area defined by the user around the GPS module.

According to a preferred embodiment of the present invention, the processing unit is advantageously linked through digital and/or analogic connectors to various peripherals or sensors by galvanic isolation means in order to avoid possible mistakes in the manipulation of the system by the user.

A preferred embodiment of the present invention will be described also in the following detailed description of the invention in reference to the enclosed figures without limiting the scope of the present invention.

### Short description of the drawings

The fig. 1 represents schematically the system according to the invention.

The fig. 2 represents a flow chart of the various steps performed by the system following a request from the user.

### Detailed description of the invention

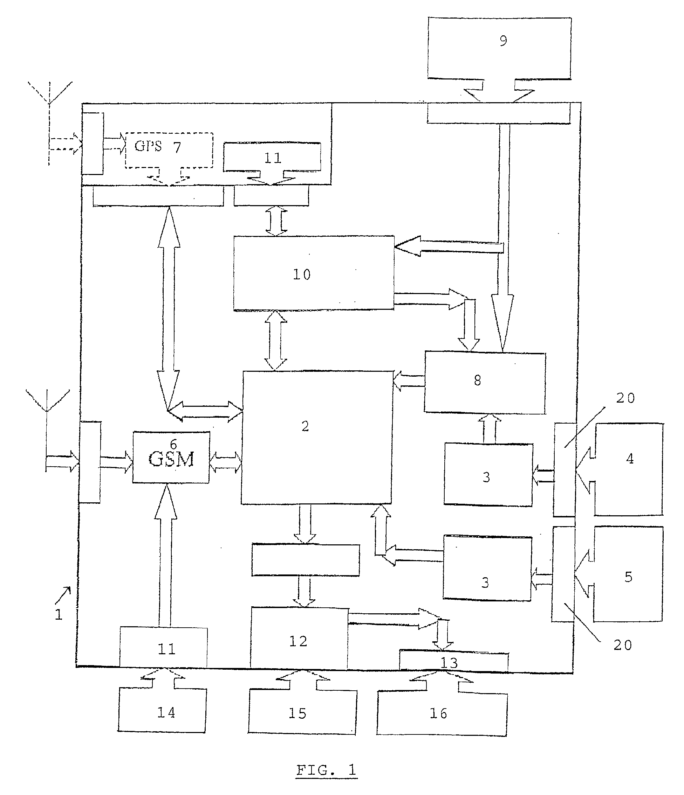

The communication for transmitting and receiving messages according to the invention is described schematically by block units in the figure 1 and comprises integrated in a box 1 an electronic card comprising an microprocessor 2 (command or processing unit) linked to various peripherals 4 and/or sensors 5 integrated with a local mobile telephone transmitter/receiver GSM, GPCR or UMTS module 6.

The link through digital and/or analogic connectors (20) to various peripherals 4 and sensors 5 is made through galvanic isolation means 3 in order to avoid possible mistake in the manipulation of the connectors by the user. Said connectors allow a measurement of a voltage between 0 and 10 volts and a current between 4 and 20 mA.

Furthermore, the programmable microprocessor 2 comprises also a link to a GPS module or arrangement 7, whereby a position modification of the box comprising the processing unit and the local mobile telephone transmitter/receiver GSM, GPCR or UMTS module outside an area (selected by the user) around the GPS module is available to the user.

Furthermore, one of the blocks presented in the figure 1 is a link of the microprocessor 2 to a control system 8 of the voltage received by a small solar cell 9 and a link to a control circuit 10 of charge and discharge of the current including charge and discharge of a battery 11 of 12 volts and a possible link to an external current supply.

The system may also comprise a link to a supervision arrangement, such as an alarm system (not represented) and possibly incorporated into the box, which informs the user if a break-in of the box is made by a manipulator.

The box may comprise also other connectors or accesses 11, 12 and 13 for a SIM card 14 to the GSM module 6, to a fuse 15 and external connections (bi-stable relay contact 16, wherein a single electrical impulsion contact of said relay maintains its position).

Advantageously, the system is also particularly suitable for low consumption due to the specifically selected element integrated in said box which requires low power supply (lower than about 4V), due to the use of bi-stable relay (one single electrical impulsion maintaining the open or closed position) and due to the fact that the processing (or command) unit induces the activation of the peripherals or sensors only following specific requests by the users, said activation being maintained during the measuring by the sensor or during the processing made upon the peripherals.

The box is adapted to be integrated in a communication system for transmitting and receiving messages (instructions and queries by SMS messages) from multiple users and the system comprises therefore also a radio communication network and one or more remote mobile terminals (not represented) operable with said radio communication network and which are used by one or more users (consumers) in order to transmit and receive through said radio communication network and via de GSM, GPCR or UMTS module 6 messages to and from the microprocessor 2.

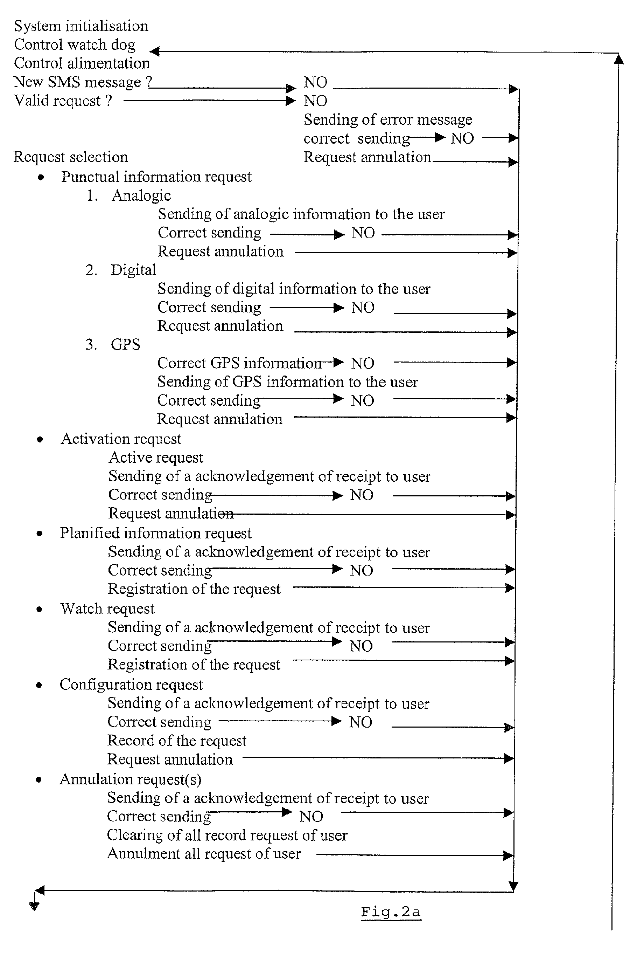

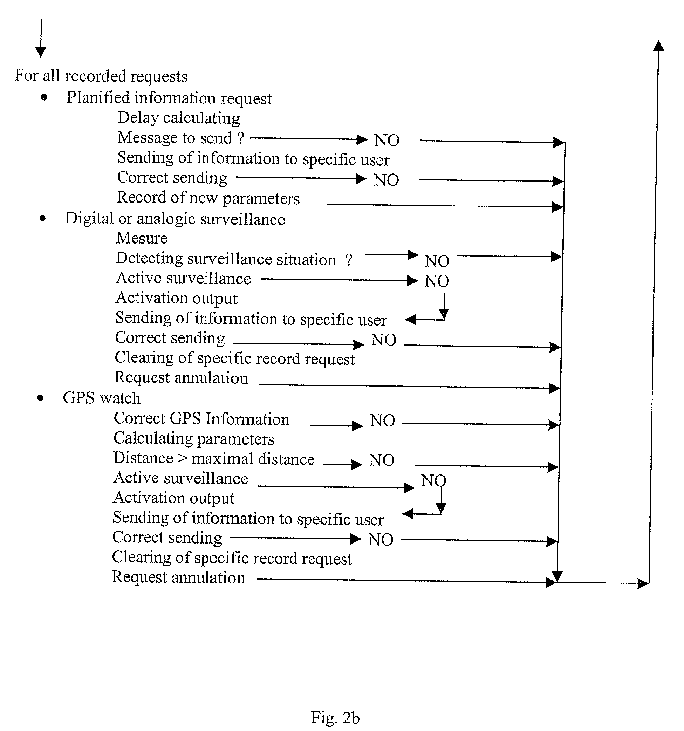

The following figure 2 represents schematically the various steps performed by the programmed microprocessor responding to a specific query or request of a user. Most of said steps are performed successively and chronologically by the microprocessor according to the type of task requested by the users.

As shown hereafter in the figure 2, the query or the request message could be a punctual information request (or query) regarding analogic and/or digital signals or could be a query regarding a location of the box (GPS localisation information).

Other requests are an activation request, a planified information request, a watch or maintenance request, a configuration request or a cancellation of the previous request(s) (see table 1)

According to the type of request, a secret request code could be also used in order to validate a specific request by the system.

Various examples of specific requests are presented in the following table.

A request means an SMS message sent by the user; explanation means description of the request; direct response means a SMS message sent by the system to the user directly and following reception of the request, response after a detection means an SMS message sent by the system to the user when the task requested has been performed.

A configuration request allows the user to give a specific name and function to the system according to the invention and may identify by the use of specific terms, the peripherals and sensors activated in order to perform the task requested.

Furthermore, the user can also introduce a specific secret code in order to validate said request. The digital and analogic requests are for example:
- an information request regarding the value of digital entry X,
- a request regarding the same value after a specific time delay,
- a message regarding a possible modification of a digital or analogic entry,
- a watch request regarding a modification of a value in entry above a specific level, etc.

A GPS request is a specific request regarding a possible modification of the box position of the system which is available to the user. For instance, a GPS request requires information regarding the position outside an area around the box and the speed from a starting point of the box immediately or after a specific time delay, etc.

Additional requests allow the user to be informed about the possible charge or discharge of the battery 11 or the amount of current received by the solar cell 9 or a modification in a supervision arrangement (alarm system is open).

Furthermore, in the following tables several terms should be defined:
- the term "Aaaaaaaaaaaaaaaa" defines the name of the detector,
- "ssss" = secret code,

The system according to the invention may find advantageous use in various fields, especially for collecting information or data at long distance or to maintain a watch or maintenance upon a modification recorded by various sensors (modification of temperature, modification of movement, etc.). Such modulable and transportable system could be present in open fields and could be independent of any building.

Furthermore, due to the use of low power supply and due to the use of a small solar cell 9, the system is preferably independent of an external electric supply.

Furthermore, such system could be easily activated by any remote mobile terminal operable within a radio communication network (GPCR, UMTS or GSM network) or a personal computer comprising means for being operable within said radio communication network through remote communication (SMS messages sent by mobile telephone).

### Configuration

| REQUEST | EXPLANATION | DIRECT RESPONSE | RESPONSE AFTER DETECTION |
|---|---|---|---|
| Nepppp | Identification | Aaaaaaaaaaaaaaaa | |
| Aaaaaaaaaaaaaaaa | System | Aaaaaaaaaaaaaaaa | |
| Identification | | | |
| System | | | |
| Programmation code | | | |
| Name given | | | |
| NDIxpppp | Identify the exit x | Ix(nnnnnnnn)=y | |
| Nnnnnnnn | with the name | Aaaaaaaaaaaaaaaa | |
| Identification | Nnnnnnnn | Exit 'x', identified | |
| Digital Input 'x' | | 'nnnnnnnn' means 'y' | |
| Programmation code | | 1<=x<=2, 0<=y<=1 | |
| Name | | | |
| NDOxpppp | Identify the exit x | Ox(nnnnnnnn)=y | |
| Nnnnnnnn | with the name | Aaaaaaaaaaaaaaaa | |
| Identification | Nnnnnnnn | Exit 'x', identified | |
| Digital Output 'x' | | 'nnnnnnnn'means 'y' | |
| Programmation code | | 1<=x<=2, 0<=y<=1 | |
| Name | | | |
| NAIxpppp | Identify the secret | Ax(nnnnnnnn)=yyy | |
| Nnnnnnnn | code | Aaaaaaaaaaaaaaaa | |
| Identification | pppp=prog code | Analogic entry 'x' named | |
| Analogic 'x' | cccc=new code | 'nnnnnnnn' means 'yyy' | |
| Programmation code | secret | 1<=x<=1, 0<=y<=999 | |
| Name | vvvv=new code | | |
| | secret | | |
| NSppppccccvvvv | Identify the secret | NS ssss | |
| Identification | code | Aaaaaaaaaaaaaaaa | |
| Secret code | pppp=prog code | Secret code: ssss | |
| Programmation code | cccc=new code | | |
| New check | vvvv=new secret | | |
| Secret check | code | | |
| NPppppccccvvvv | Identify the secret | NP ssss | |
| Identification | code | Aaaaaaaaaaaaaaaa | |
| Secret code | pppp=prog code | Programmation | |
| Programmation code | cccc=new | code: ssss | |
| New code | programmation code | | |
| Secret code | vvvv=check new code | | |
| | programmation | | |
| NMmmm...m | Identification of | NM mmmm...m | |
| Tel.no. | message service | Aaaaaaaaaaaaaaaa | |
| Message service | number | | |
| DIIx | Request the value | Ix(nnnnnnnn)=y | |
| Digital | of the digital entry no. 'x' | Aaaaaaaaaaaaaaaa | |
| Information | (1<=x<=4) | Entry 'x' named 'nnnnnnnn' | |
| Input x | | means 'y' | |
| | | 1<=x<=4, 0<=y<=1 | |
| DIIxMssssmm | Request the value | DIIxMmm | DIIxMmm |
| Digital | of the digital | Ix(nnnnnnnn)=y | Ix(nnnnnnnn)=y |
| Information | entry no.'x' every | Aaaaaaaaaaaaaaaa | Aaaaaaaaaaaaaaaa |
| Input x | 'mm' minutes | Entry 'x' named 'nnnnnnnn' | Entry 'x' named |
| Secret Minute code | (1<=x<=4) | means 'y' | 'nnnnnnnn' means 'y' |
| mm | (1<=mm<=60) | 1<=x<=4, 0<=y<=1 | 1<=x<=4, 0<=y<=1 |
| DIIxIIsssshh | Request the value | DIIxHhh | DIIxHhh |
| Digital | of the digital | Ix(nnnnnnnn)=y | Ix(nnnnnnnn)=y |
| Information | entry no.'x' every | Aaaaaaaaaaaaaaaa | Aaaaaaaaaaaaaaaa |
| Input x | 'mm' minutes | Entry 'x' named 'nnnnnnnn' | Entry 'x' named |
| Secret Hour code hh | (1<=x<=4) | means 'y' | 'nnnnnnnn' means 'y' |
| | (1<=hh<=24) | 1<=x<=4, 0<=y<=1 | 1<=x<=4, 0<=y<=1 |
| DIIxDssss | Request the value | DIIxO | DIIxO |
| Digital | of digital entry | Ix(nnnnnnnn)=y | Ix(nnnnnnnn)=y |
| Information | no. 'x' every day | Aaaaaaaaaaaaaaaa | Aaaaaaaaaaaaaaaa |
| Input x | of the week at the | Entry 'x' named 'nnnnnnnn' | Entry 'x' named |
| Secret day code | same hour of the | means 'y' | 'nnnnnnnn' means 'y' |
| | request | 1<=x<=4, 0<=y<=1 | 1<=x<=4, 0<=y<=1 |
| | (1<=x<=4) | | |
| DIOx | Request the value | Ox(nnnnnnnn)=y | |
| Digital | of the digital exit | Aaaaaaaaaaaaaaaa | |
| Information | no. 'x' | Exit 'x' named 'nnnnnnnn' | |
| Output x | (1<=x<=2) | means 'y' | |
| | | 1<=x<=2, 0<=y<=1 | |
| Doxssssy | Put the exit 'x' at | Ox(nnnnnnnn)=y | |
| Digital | the value 'y' | Aaaaaaaaaaaaaaaa | |
| Output x | (1<=x<=2) | Exit 'x' named 'nnnnnnnn' | |
| Secret code | (0<=y<=1) | means 'y' | |
| Value y | | 1<=x<=2, 0<=y<=1 | |
| DSIxssssy | Request watch of | DSI x y | DSI x y |
| Digital | the entry 'x': | Ix(nnnnnnnn)=y | Ix(nnnnnnnn)=y |
| Watch | Inform if entry | Aaaaaaaaaaaaaaaa | Aaaaaaaaaaaaaaaa |
| Input x | means 'y' | Input 'x' named 'nnnnnnnn' | Entry 'x' named |
| Secret code | (1<=x<=4) | means 'y' | 'nnnnnnnn' means 'y' |
| Test value | (0<-y<-1) | 1<=x<-4, 0<=y<=1 | (1<=x<=4, 0<=y<-1) |
| DSIxssssyOuv | Request watch of | | DSI x y o u v |
| Digital | the entry 'x': | | Ix(nnnnnnnn)=y |
| Watch | Inform and put exit | | Aaaaaaaaaaaaaaaa |
| Secret code | 'u' to value v if | | Entry 'x' named |
| Test value | entry means 'y' | | 'nnnnnnnn' means 'y' |
| | (1<=x<=4) | | (1<=x<=4, 0<=y<-1) |
| | (0<=y<=1) | | Ou(nnnnnnnn)=v |
| Exit 'u' | (1<=u<=2) | | Aaaaaaaaaaaaaaaaa |
| Value 'v' | (0<=v<=1) | | Exit 'u' named |
| | | | 'nnnnnnnn' means 'y' |
| | | | 1<-u<-2, 0<-v<-1 |
| DSOxssssy | Request watch of | DSO x y | DSI x y |
| Digital | the exit 'x': | Ox(nnnnnnnn)=y | Ix(nnnnnnnn)=y |
| Watch | Inform if exit | Aaaaaaaaaaaaaaaa | Aaaaaaaaaaaaaaaa |
| Output x | means 'y' | Output 'x' named 'nnnnnnnn' | Entry 'x' named |
| Secret code | (1<=x<=2) | means 'y' | 'nnnnnnnn' means 'y' |
| Test value | (0<-y<=1) | 1<=x<=2, 0<=y<-1 | (1<=x<=2, 0<=y<=1) |
| Aix | Request the value of | Ax(nnnnnnnn)=yyy | |
| Analogic | the analogic entry | Aaaaaaaaaaaaaaaa | |
| Information | no. | Analogic entry 'x' named | |
| Entry x | 'x' (1<=x<=4) | 'nnnnnnnn' means 'yyy' | |
| | x=3: internal battery | 1<-x<-4, 0<-y<-999 | |
| | x=4: external feed | | |
| AlxMssssmm | Request the value of | AixMmm | AixMmm |
| Analogic | the analogic entry | Ax(nnnnnnnn)=yyy | Ax(nnnnnnnn)=yyy |
| Information | no. 'x' every 'mm' | Aaaaaaaaaaaaaaaa | Aaaaaaaaaaaaaaaa |
| Entry x | minutes | Analogic entry 'x' named | Analogic entry 'x' |
| Secret minute code | (1<=x<=4) | 'nnnnnnnn' means 'yyy' | named 'nnnnnnnn' |
| mm | (1<=mm<=60) | 1<-x<-4, 0<-y<-999 | means 'yyy' |
| | x=3: internal battery | | 1<=x<=4, 0<=y<=999 |
| | x=4: external feed | | |
| AlxHsssshh | Request the value of | AIxHhh | AIxHhh |
| Analogic | the analogic entry | Ax(nnnnnnnn)=yyy | Ax(nnnnnnnn)=yyy |
| Information | no. 'x' every 'hh' | Aaaaaaaaaaaaaaaa | Aaaaaaaaaaaaaaaa |
| Entry x | hours | Analogic entry 'x' named | Analogic entry 'x' |
| Secret Hour code | (1<=x<=4) | 'nnnnnnnn' means 'yyy' | named 'nnnnnnnn' |
| hh | (1<=hh<=24) | 1<=x<=4, 0<=y<=999 | means 'yyy' |
| | x=3: internal battery | | 1<=x<=4, 0<=y<=999 |
| | x=4: external feed | | |
| AlxDssss | Request the value of | AixD | AIxD |
| Analogic | the analogic entry | Ax(nnnnnnnn)=yyy | Ax(nnnnnnnn)=yyy |
| Information | no. 'x' every same | Aaaaaaaaaaaaaaaa | Aaaaaaaaaaaaaaaa |
| Entry x | day of the week and | Analogic entry 'x' named | Analogic entry 'x' |
| Secret day code | at the same hour as | 'nnnnnnnn' means 'yyy' | named 'nnnnnnnn' |
| | the request | 1<=x<=4, 0<=y<=999 | means 'yyy' |
| | (1<=x<=4) | | 1<=x<=4, 0<=y<=999 |
| | x=3: internal battery | | |
| | x=4: external feed | | |
| AixOssss | Request the value of | AixO | AIxO |
| Analogic | the analogic entry | Ax(nnnnnnnn)=yyy | Ax(nnnnnnnn)=yyy |
| Information | no. 'x' every same | Aaaaaaaaaaaaaaaa | Aaaaaaaaaaaaaaaa |
| Entry x | day of the month and | Analogic entry 'x' named | Analogic entry 'x' |
| Secret Mounth code | at the same hour as | 'nnnnnnnn' means 'yyy' | named 'nnnnnnnn' |
| | the request | 1<=x<=4, 0<=y<=999 | means 'yyy' |
| | (1<=x<=4) | | 1<=x<=4, 0<=y<=999 |
| | x=3: internal battery | | |
| | x=4: external feed | | |
| Asxssssyyyz | Request the watch of | AS x :yyy :z | AS x :yyy :z |
| Analogic | the analogic entry | Ax(nnnnnnnn)=vvv | Ax(nnnnnnnn)=vvv |
| Watch | 'x'. | Aaaaaaaaaaaaaaaa | Aaaaaaaaaaaaaaaa |
| Input x | Inform if entry is | Input 'x' named 'nnnnnnnn' | Analogic entry 'x' |
| Secret code | >'yyy' for z=1 or if | means 'vvv' | named 'nnnnnnnn' means |
| Test value | entry<'yyy' for z=0 | 1<-x<-4,0<-y<-999, | 'vvv' |
| Yyy | (1<=x<=4) | o<-z<-1 | 1<=x<=4, 0<=y<=999 |
| | (0<=y<=999) | | |
| Asxssssyyyzotu | Request the watch of | AS x :yyy :z:Otu | AS x :yyy :z:Out |
| Analogic | the analogic entry | Ax(nnnnnnnn)=vvv | Ax(nnnnnnnn)=vvv |
| Information | no. 'x'. | Aaaaaaaaaaaaaaaa | Aaaaaaaaaaaaaaaa |
| Entry x | Inform if entry is | Input 'x' named 'nnnnnnnn' | Analogic entry 'x' |
| Secret Mounth code | >'yyy' for z=1 or if | means 'vvv' | named 'nnnnnnnn' means |
| | entry <'yyy' for z=0 | 1<=x<=4, 0<=y<=999 | 'vvv' |
| | Put the exit 't' at | 0<=z<=1, 1<=t<=2, | 1<=x<=4, 0<-y<-999, |
| Sortie 't' | value u in both | 0<=u<=1 | |
| Valeur 'u' | cases. | | Ot(nnnnnnnn)=u |
| | (1<=x<=4) | | Aaaaaaaaaaaaaaaa |
| | (0<=y<=999) | | Exit 't' named |
| | | | 'nnnnnnnn' means 'u' |
| | | | 1<=t<=2, 0<=u<=1 |

### Requests GPS

| REQUEST | EXPLANATION | DIRECT RESPONSE | RESPONSE AFTER DETECTION OR AFTER EACH PERIOD OF TIME |
|---|---|---|---|
| GI | Request the position | jjmmaa_hhmmssGMT | |
| GPS | and the machine speed | _ddmm.mmmmNvvvK | |
| Information | | dddmm.mmmmE_ppM | |
| | | aaaaaaaaaaaaaaaaaaaa | |
| | | date hour GMT | |
| | | position N/S speed Kmh | |
| | | position E/W precision M | |
| GIMssssmm | Request the position | GIM mm | GIM mm |
| GPS | and machine speed | Jjmmaa_hhmmssGMT | jjmmaa_hhmmssGMT |
| Information | every 'mm' minutes | _ddmm.mmmmNvvvk | _ddmm.mmmmNvvvK |
| Secret Minute | | dddmm.mmmmE_ppM | dddmm.mmmmE_ppM |
| code mm | | aaaaaaaaaaaaaaaaaaaa | aaaaaaaaaaaaaaaaaaaa |
| | | date hour GMT | date hour GMT |
| | | position N/S speed Kmh | position N/S speed Kmh |
| | | position E/W precision M | postion E/W precision M |
| GIHsssshh | Request the position | GIII hh | GIH hh |
| GPS | and machine speed | Jjmmaa_hhmmssGMT | jjmmaa_hhmmssGMT |
| Information | every 'hh' minutes | _ddmm.mmmmNvvvK | _ddmm.mmmmNvvvK |
| Secret Hour code | | dddmm.mmmmE_ppM | dddmm.mmmmE_ppM |
| hh | | aaaaaaaaaaaaaaaaaaaa | aaaaaaaaaaaaaaaaaaaa |
| | | date hour GMT | date hour GMT |
| | | position N/S speed Kmh | position N/S speed Kmh |
| | | position E/W precision M | postion E/W precision M |
| GIDssss | Request the position | GID | GID |
| GPS | and machine speed | jjmmaa_hhmmssGMT | jjmmaa_hhmmssGMT |
| Information | every same day of the | _ddmm.mmmmNvvvK | _ddmm.mmmmNvvvK |
| Secret Day code | week and at the same | dddmm.mmmmE_ppM | dddmm.mmmmE_ppM |
| | hour as the request | aaaaaaaaaaaaaaaaaaaa | aaaaaaaaaaaaaaaaaaaa |
| | | date hour GMT | date hour GMT |
| | | position N/S speed Kmh | position N/S speed Kmh |
| | | position E/W precision M | postion E/W precision M |
| GIOssss | Request the position | GIO | GIO |
| GPS | and machine speed | jjmmaa_hhmmssGMT | jjmmaa_hhmmssGMT |
| Information | every same day of the | _ddmm.mmmmNvvvK | _ddmm.mmmmNvvvK |
| Secret mOunth | week and at the same | dddmm.mmmmE_ppM | dddmm.mmmmE_ppM |
| code | hour as the request | aaaaaaaaaaaaaaaaaaaa | aaaaaaaaaaaaaaaaaaaa |
| | | date hour GMT | date hour GMT |
| | | position N/S speed Kmh | position N/S speed Kmh |
| | | position E/W precision M | postion E/W precision M |
| Gsssssyyy | Request the watch of | GS yyy0 M | GS yyy0 M |
| GPS | the position from the | jjmmaa_hhmmssGMT | jjmmaa_hhmmssGMT |
| Watch | current position and | _ddmm.mmmmNvvvK | _ddmm.mmmmNvvvK |
| Secret code | in a row yyy | dddmm.mmmmE_ppM | dddmm.mmmmE_ppM |
| Row yyy | Vvv-row in hundreds | aaaaaaaaaaaaaaaaaaaa | aaaaaaaaaaaaaaaaaaaa |
| | of meters | date hour | date hour |
| | Ex: yyy=011 | position N/S speed Kmh | position N/S speed Kmh |
| | Row=1100 meters | position E/W precision M | postion E/W precision M |
| | Inform if the system | | |
| | leaves the area | | |
| GSssssyyyOuv | Request the watch of | GS yyy0 M O u v | GS yyy0 M O u v |
| GPS | the position from the | jjmmaa_hhmmssGMT | jjmmaa_hhmmssGMT |
| Watch | current position and | _ddmm.mmmmNvvvK | _ddmm.mmmmNvvvK |
| Secret code | in a row yyy | dddmm.mmmmE_ppM | dddmm.mmmmE_ppM |
| Row yyy | Vvv-row in hundreds | aaaaaaaaaaaaaaaaaaaa | aaaaaaaaaaaaaaaaaaaa |
| | of meters | date hour | date hour |
| | Ex: yyy=011 | position N/S speed Kmh | position N/S speed Kmh |
| | Row=1100 meters | position E/W precision M | postion E/W precision M |
| | Inform if the system | | Ou(nnnnnnnn)=v |
| | leaves the area | | Aaaaaaaaaaaaaaaaaaaaa |
| | | | Exit 'u' named 'nnnnnnnn' |
| | | | means 'v' |
| | | | 1<=u<=2, 0<=v=1 |

### Digital command

Rem : 'Aaaaaaaaaaaaaaaa'=name of detector. 'nnnnnnnn' name of periferic 'ssss'=Secret code

| REQUEST | EXPLICATION | DIRECT ANSWER ACKNOWLEDGMENT OF RECEIPT | ANSWER AFTER DETECTION OR AFTER EACH PERIOD OF TIME |
|---|---|---|---|
| DIIxRssss | Value request of the | DIIxRsdddhhmm | DIIxRsdddhhmm |
| Dddhhmm | digital entry nr. 'x' | Ix(nnnnnnnn)=y | Ix(nnnnnnnn)=y |
| Digital | every | Aaaaaaaaaaaaaaaa | Aaaaaaaaaaaaaaaa |
| Information | 'ddd' days | Entry 'x' named 'nnnnnnnn' | Entry 'x' named |
| Input x | 'hh' hours | is 'y' | 'nnnnnnnn' is 'y' |
| Repeat | 'mm' minutes | 1<=x<=4, 0<=y<=1 | 1<=x<=4, 0<=y<=1 |
| Secret code | (1<=x<=4) | | |
| Day ddd | (0<=ddd<=999) | | |
| hour hh | (0<=hh<=23) | | |
| Minute mm | (0<=mm<=59) | | |
| DIIx | Value request of the | DIIx | |
| Digital | digital entry nr. 'x' | Ix(nnnnnnnn)=y | |
| Information | (1<=x<=4) | Aaaaaaaaaaaaaaaa | |
| Input x | | Entry 'x' named 'nnnnnnnn' | |
| | | is 'y' | |
| | | 1<=x<=4, 0<=y<=1 | |
| DIOx | Value request of the | DIOx | |
| Digital | digital exit nr. 'x' (1<=x<=2) | Ox(nnnnnnnn)=y | |
| Information | | Aaaaaaaaaaaaaaaa | |
| Output x | | Entry 'x' named | |
| | | 'nnnnnnnn' is 'y' | |
| | | 1<=x<=2, 0<=y<=1 | |
| Doxssssy | Put the exit 'x' at the value 'y' | DOxsy | |
| Digital | (1<=x<=2) | Ox(nnnnnnnn)=y | |
| Output x | (0<=y<=1) | Aaaaaaaaaaaaaaaa | |
| Secret code | | Exit 'x' named 'nnnnnnnn' | |
| Value y | | is 'y' | |
| | | 1<=x<=2, 0<=y<=1 | |
| DSIxssssyD | Surveillance request | DSIxsyDdddhhmm | DSIxsyDdddhhmm |
| dddhhmm | of the entry 'x' | Ix(nnnnnnnn)=y | alarm |
| Digital | Informs if entry is 'y' | Aaaaaaaaaaaaaaaa | Ix(nnnnnnnn)=y |
| Surveillance | during | Input 'x' named 'nnnnnnnn' | Aaaaaaaaaaaaaaaa |
| Input x | ddd days | is 'y' | Input 'x' named |
| Secret code | hh hours | 1<=x<=4, 0<=y<=1 | 'nnnnnnnn' is 'y' |
| Value test y | mm minutes | | 1<=x<=4, 0<=y<=1 |
| Function Delai | (1<=x<=4) | | |
| Day ddd | (0<=y<=1) | | |
| hour hh | (0<=ddd<=999) | | |
| Minute mm | (0<=hh<=23) | | |
| | (0<=mm<=59) | | |

### Miscellaneous

| REQUEST | EXPLANATION | DIRECT RESPONSE | RESPONSE AFTER DETECTION OR AFTER EACH PERIOD OF TIME |
|---|---|---|---|
| BSssss | Inform if battery | GIM mm | GIM mm |
| Battery | change is necessary | Jjmmaa_hhmmssGMT | Jjmmaa_hhmmssGMT |
| Watch | | _ddmm;mmmmNvvvK | _ddmm.mmmmNvvvK |
| | | dddmm.mmmmE_ppM | dddmm.mmmmE_ppM |
| | | aaaaaaaaaaaaaaaaaaaa | aaaaaaaaaaaaaaaaaaaa |
| | | date hour GMT | date hour GMT |
| | | position N/S speed Kmh | position N/S speed Kmh |
| | | position E/W precision M | position E/W precision |
| | | | M |

## Claims

1. A communication system for transmitting and receiving messages, resulting from multiple tasks required by one or more users, said system comprising a radio communication network for transmitting and receiving said messages, at least one remote mobile terminal operable with the radio communication network, able to be used by said users (through which the users can send instruction messages regarding one or more tasks to be performed) and a processing unit (2) linked through digital and/or analogic connectors to various peripherals and sensors (4 and 5), said procession unit (2) being integrated within a local mobile telephone transmitter/receiver GSM (module) (6) operable with the radio communication network, wherein said processing unit (2) is programmed to receive instruction messages from the multiple users, to control the required multiple tasks performed upon the peripherals or sensors (4 and 5) and to transmit one or more result message(s) from said performed tasks to the multiple users through remote communications.

2. The communication system according to claim 1, wherein the processing unit (2) is programmed to receive and treat chronologically the instruction messages requested by the multiple users.

3. The communication system according to claim 1 or 2, wherein the processing unit (2) is also linked to a GPS module or arrangement (7).

4. The communication system according to any of the preceding claims, wherein the processing unit (2) is linked through digital and/or analogic connectors (20) to various peripherals and sensors (4 and 5) by galvanic isolation means (3).

5. The communication system according to any of the preceding claims, wherein the peripherals and sensors are only activated following instruction message(s) received from one or more users.

6. The communication system according to any of the preceding claims, wherein the processor unit is linked to a solar cell or to an external low power.
